# EUROPÄISCHE PATENTANMELDUNG

(11) **EP 4 039 954 A1**
(43) Veröffentlichungstag der Anmeldung: **10.08.2022**
(21) Anmeldenummer: 21156058.6
(22) Anmeldetag: 09.02.2021
(51) Int. Cl.: F01N 13/10, F02B 37/007, F01D 9/02

(54) **GASAUSTRITTSGEHÄUSE, ANORDNUNG VON GASAUSTRITTSGEHÄUSEN, ABGASTURBOLADER MIT EINEM GASAUSTRITTSGEHÄUSE UND VERWENDUNG EINES GASAUSTRITTSGEHÄUSES**

(71) Anmelder: ABB Switzerland Ltd., 5400 Baden (CH)
(72) Erfinder: HAEGE, Christoph, 79618 Rheinfelden (DE); RECHIN, Thomas, 5400 Baden (CH); ALBIEZ, Bernd, 79736 Rickenbach (DE); PHILLIPSEN, Bent, 5406 Baden-Rütihof (CH); DICKMANN, Hans-Peter, 79761 Waldshut (DE)
(74) Vertreter: Zimmermann & Partner Patentanwälte mbB

(57) **Zusammenfassung**

Es wird ein Gasaustrittsgehäuse für einen Abgasturbolader beschrieben. Das Gasaustrittsgehäuse umfasst einen Diffusor-Gehäuseabschnitt zur Verzögerung eines aus einer Turbine des Abgasturboladers in einer Einströmrichtung in den Diffusor-Gehäuseabschnitt einströmenden Abgasstroms. Der Diffusor-Gehäuseabschnitt weitet sich in Strömungsrichtung auf. Das Gasaustrittsgehäuse umfasst weiterhin einen stromabwärts unmittelbar auf den Diffusor-Gehäuseabschnitt folgenden Verteiler-Gehäuseabschnitt zum Empfangen des verzögerten Abgasstroms aus dem Diffusor-Gehäuseabschnitt. Der Verteiler-Gehäuseabschnitt erstreckt sich in einer im Wesentlichen quer zur Einströmrichtung verlaufenden Verteiler-Achse und umfasst zwei entlang der Verteiler-Achse gegenüberliegende Öffnungen für den Abgasstrom.

## Beschreibung

### Technisches Gebiet

Die Erfindung liegt auf dem Gebiet der Abgasturbolader für aufgeladene Brennkraftmaschinen und betrifft insbesondere ein Gasaustrittsgehäuse für einen Abgasturbolader, wobei das Gasaustrittsgehäuse einen Diffusor-Gehäuseabschnitt sowie einen Verteiler-Gehäuseabschnitt beinhaltet. Des Weiteren betrifft die Erfindung eine Anordnung mit einem ersten Gasaustrittsgehäuse und einem zweiten Gasaustrittsgehäuse, einen Abgasturbolader mit einem Gasaustrittsgehäuse, sowie die Verwendung eines Gasaustrittsgehäuses in einem Abgassystem von Verbrennungsmotoren.

### Technischer Hintergrund

In Abgasturboladern wird der Abgasstrom eines Verbrennungsmotors zum Antrieb einer abgasseitigen Turbine verwendet. Die so erzeugte Arbeit wird zum Antrieb eines eingangsseitig am Verbrennungsmotors liegenden Verdichters genutzt, der die Ansaugluft des Motors verdichtet. Durch die so ermöglichte Aufladung des Verbrennungsmotors können die Leistung und der Wirkungsgrad des Verbrennungsmotors gesteigert werden.

Nach dem Durchströmen der abgasseitigen Turbine gelangt der Abgasstrom in ein Gasaustrittsgehäuse des Turboladers und wird dort abgeleitet. Hierin wird der Abgasstrom zum Erreichen eines möglichst hohen Turbinenwirkungsgrads vorteilhafterweise in einen Diffusor eingeführt, wo der Abgasstrom verzögert wird und sich dabei der Gasdruck des Abgasstroms erhöht. Aus der WO2019076980A1 ist bekannt, dass durch die Verwendung eines geeigneten Diffusors das Auftreten von Ablösungen oder Wirbeln vermieden werden kann.

Wenn mehrere Abgasströme aus mehreren Abgasturboladern vorliegen, können diese etwa in eine gemeinsame Abgasleitung, wie z.B. einen gemeinsamen Schornstein, geleitet werden. Insbesondere für eine Anordnung, in der eine ungerade Anzahl an Abgasströmen vereinigt werden soll, ist jedoch bislang keine Vorrichtung bekannt, die die Abgasströme auf strömungstechnisch günstige Weise verzögert und vereinigt und gleichzeitig platzsparend und mit einer möglichst geringen Anzahl von verschiedenen Bauteilen realisierbar ist.

Vor diesem Hintergrund werden daher Vorrichtungen und eine Verwendung gemäß den unabhängigen Ansprüchen der vorliegenden Patenanmeldung vorgeschlagen. Weitere günstige Ausführungsformen ergeben sich aus den abhängigen Ansprüchen und der Beschreibung.

### Kurze Darstellung der Erfindung

Gemäß einem Aspekt der Erfindung wird ein Gasaustrittsgehäuse für einen Abgasturbolader beschrieben. Das Gasaustrittsgehäuse umfasst einen Diffusor-Gehäuseabschnitt zur Anordnung unmittelbar stromabwärts einer Turbine des Abgasturboladers zur Verzögerung eines aus der Turbine des Abgasturboladers in einer Einströmrichtung unmittelbar in den Diffusor-Gehäuseabschnitt einströmenden Abgasstroms. Der Diffusor-Gehäuseabschnitt ragt zumindest teilweise in den Vereinigungs-Gehäuseabschnitt hinein. Der Diffusor-Gehäuseabschnitt weitet sich in Strömungsrichtung auf. Das Gasaustrittsgehäuse umfasst weiterhin einen stromabwärts unmittelbar auf den Diffusor-Gehäuseabschnitt folgenden Verteiler-Gehäuseabschnitt zum Empfangen des verzögerten Abgasstroms aus dem Diffusor-Gehäuseabschnitt. Der Verteiler-Gehäuseabschnitt erstreckt sich in einer im Wesentlichen quer zur Einströmrichtung verlaufenden Verteiler-Achse und umfasst zwei entlang der Verteiler-Achse gegenüberliegende Öffnungen für den Abgasstrom.

Gemäß einem Aspekt der Erfindung werden ein erstes Gasaustrittsgehäuse und ein zweites Gasaustrittsgehäuse beschrieben. Das erste Gasaustrittsgehäuse ist ein Gasaustrittsgehäuse nach einer hierin beschriebenen Ausführungsform. Das erste Gasaustrittsgehäuse ist dazu eingerichtet, den verzögerten Abgasstrom in einer entlang der Verteiler-Achse (153) verlaufenden Ausleite-Richtung aus den Öffnungen auszuleiten. Zumindest eine der Öffnungen des ersten Gasaustrittsgehäuses ist fluidisch mit einer Öffnung des zweiten Gasaustrittsgehäuses zum Aufnehmen des verzögerten Abgasstroms verbunden, sodass der zumindest eine aus dem ersten Gasaustrittsgehäuse ausgeleitete Abgasstrom in das zweite Gasaustrittsgehäuse eingeleitet wird.

Gemäß einem Aspekt der Erfindung wird ein Abgasturbolader für einen Verbrennungsmotor beschrieben. Der Abgasturbolader umfasst ein Gasaustrittsgehäuse gemäß einer hierin beschriebenen Ausführungsform. Der Abgasturbolader ist mit dem Gasaustrittsgehäuse zum Einleiten des Abgasstroms in den Diffusor-Gehäuseabschnitt des Gasaustrittsgehäuses fluidisch verbunden. Der Abgasstrom ist ein aus der Turbine des Abgasturboladers stammender Abgasstrom.

Gemäß einem Aspekt betrifft die Erfindung die Verwendung eines Gasaustrittsgehäuses nach einer der hierin beschriebenen Ausführungsformen in einem Abgassystem eines oder mehrerer Verbrennungsmotoren mit Abgasturboladern. Die Verwendung umfasst das Einleiten eines aus der Turbine des Abgasturboladers austretenden Abgasstroms in einer Einströmrichtung in den Diffusor-Gehäuseabschnitt des Gasaustrittsgehäuses. Der Diffusor-Gehäuseabschnitt des Gasaustrittsgehäuses verzögert den Abgasstrom entlang der Strömungsrichtung. Die Verwendung umfasst weiterhin das Einleiten des durch den Diffusor-Gehäuseabschnitt verzögerten Abgasstroms in den Verteiler-Gehäuseabschnitt des Gasaustrittsgehäuses. Der Verteiler-Gehäuseabschnitt und/oder der Diffusor-Gehäuseabschnitt des Gasaustrittsgehäuses lenkt den Abgasstrom hin zu einer entlang der Verteiler-Achse (153) verlaufenden Ausleite-Richtung um. Der Verteiler-Gehäuseabschnitt folgt unmittelbar auf den Diffusor-Gehäuseabschnitt.

Der Vorteil eines Gasaustrittsgehäuses, einer Anordnung mit einem ersten Gasaustrittsgehäuse und einem zweiten Gasaustrittsgehäuse, eines Abgasturboladers mit einem Gasaustrittsgehäuse, sowie die Verwendung eines Gasaustrittsgehäuses in einem Abgassystem von Verbrennungsmotoren gemäß einer der hierin beschriebenen Ausführungsformen liegt darin, dass ein aus einem Abgasturbolader stammender Abgasstrom auf vorteilhafte Weise verteilt werden kann. Insbesondere kann die Verteilung so erfolgen, dass eine günstige Strömung der verteilten Abgasströme erreicht wird. Vorteilhafterweise wird der Abgasstrom vor der Verteilung in einem Diffusor-Gehäuseabschnitt des Gasaustrittsgehäuses verzögert, sodass gemäß der vorliegenden Erfindung hierfür auf ein getrenntes Bauteil verzichtet werden kann. Dadurch kann eine platzsparende Ausführung des Abgassystems ermöglicht werden.

Das erfindungsgemäße Gasaustrittsgehäuse ist zum Abgasturbolader gehörig und unterscheidet sich darin z.B. von einer weiter stromabwärts angeordneten gemeinsamen Abgasleitung (z.B. einen gemeinsamen Schornstein) zum Sammeln der Abgasströme aus mehreren Abgasturboladern. Eine solche gemeinsame Abgasleitung stellt kein erfindungsgemäßes Gasaustrittsgehäuse dar, da sie nicht zum Abgasturbolader gehört und außerdem keinen stromabwärts unmittelbar auf einen Diffusor-Gehäuseabschnitt folgenden Vereinigungs-Gehäuseabschnitt aufweist.

### Kurzbeschreibung der Figuren

Im Weiteren soll die Erfindung anhand von in Figuren dargestellten Ausführungsbeispielen erläutert werden, aus denen sich weitere Vorteile und Abwandlungen ergeben. Dazu zeigen:
Figur 1 eine schematische Schnittansicht entlang der Einströmrichtung und der Verteiler-Achse durch ein Gasaustrittsgehäuse gemäß einer hierin beschriebenen Ausführungsform
Figur 2 eine schematische Schnittansicht entlang der Einströmrichtung und der Verteiler-Achse durch ein Gasaustrittsgehäuse gemäß einer hierin beschriebenen Ausführungsform
Figur 3 eine schematische Draufsicht von Seiten der Einström-Öffnung auf ein Gasaustrittsgehäuse gemäß einer hierin beschriebenen Ausführungsform
Figur 4a eine schematische Schnittansicht entlang der Einströmrichtung und der Verteiler-Achse durch ein Gasaustrittsgehäuse gemäß einer hierin beschriebenen Ausführungsform
Figur 4b eine schematische Schnittansicht entlang der Einströmrichtung und einer normal zur Verteiler-Achse liegenden Richtung durch ein Gasaustrittsgehäuse gemäß einer hierin beschriebenen Ausführungsform
Figur 5 eine schematische Draufsicht von Seiten der Einström-Öffnung auf ein Gasaustrittsgehäuse gemäß einer hierin beschriebenen Ausführungsform
Figur 6 eine schematische Schnittansicht entlang der Einströmrichtung und der Verteiler-Achse durch eine Anordnung von Gasaustrittsgehäusen gemäß einer hierin beschriebenen Ausführungsform

Im Allgemeinen werden gleiche Merkmale in den Figuren mit der gleichen Referenznummer bezeichnet. Im Allgemeinen sind gleiche oder gleichartige Merkmale einer Ausführungsform mit einer weiteren hierin beschriebenen Ausführungsform kombinierbar. Im Allgemeinen wird, sofern nicht anders erwähnt, bei der Beschreibung von unterschiedlichen Ausführungsformen nur explizit auf neue Merkmale oder Unterschiede zwischen den jeweiligen Ausführungsformen eingegangen.

### Detaillierte Beschreibung der Figuren

Im Folgenden wird die Erfindung im Zusammenhang mit den Figuren anhand von Ausführungsformen beschrieben. Da die Erfindung ein Gasaustrittsgehäuse zum Führen von Abgasströmen betrifft, erfolgt die Beschreibung im Sinne einer deutlichen und prägnanten Offenbarung teilweise unter Beschreibung des Verhaltens der zu führenden Abgasströme. Die jeweils beschriebene Ausführungsform soll hierbei so verstanden werden, dass sie dazu geeignet ist, den jeweiligen Abgasstrom in der beschriebenen Weise zu führen, auch wenn in der Beschreibung der Ausführungsform dazu an mancher Stelle direkt auf einen Abgasstrom Bezug genommen wird.

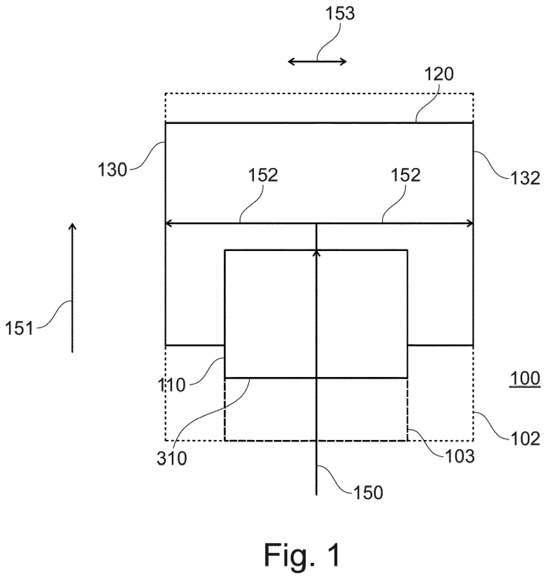

Figur 1 zeigt schematisch ein Gasaustrittsgehäuse 100 für einen Abgasturbolader 102 gemäß einer Ausführungsform. Der Abgasturbolader 102 kann mit dem Gasaustrittsgehäuse 100 fluidisch so verbunden sein, dass der gesamte Abgasstrom des Abgasturboladers 102 in das Gasaustrittsgehäuse 100 einströmt. Das Gasaustrittsgehäuse 100 kann Teil eines Abgasturboladers 102 sein. Der Abgasturbolader 102 kann ein Axial-Abgasturbolader sein, bei dem die abgasseitige Turbine 103 vom Abgasstrom axial durchströmt oder umströmt wird. Das Gasaustrittsgehäuse 100 ist ein zum Abgasturbolader zugehöriges Bauteil und kann einstückig mit von anderen Bauteilen des Abgasturboladers (etwa gemeinsam mit ihnen gegossen) oder getrennt von den anderen Bauteilen des Abgasturboladers vorgesehen sein. Das Gasaustrittsgehäuse 100 kann vom Abgasturbolader 102 oder von zum Abgasturbolader 102 gehörigen Gehäuseteilen ganz oder teilweise umschlossen sein. Das Gasaustrittsgehäuse 100 kann an den Turbolader 102 angrenzen. In Fig. 1 ist der Abgasturbolader 102 als ein das Gasaustrittsgehäuse 100 vollständig umspannendes Bauteil dargestellt. Das Gasaustrittsgehäuse kann auch selbst aus einem Stück oder aus mehreren Gehäuseteilen bestehen. Das Gasaustrittsgehäuse umfasst einen Diffusor-Gehäuseabschnitt 110 zur Verzögerung des aus der Turbine 103 des Abgasturboladers 102 stammenden Abgasstroms 150. Der Diffusor-Gehäuseabschnitt 110 ist unmittelbar - also insbesondere ohne ein sich nicht erweiterndes Zwischenstück - stromabwärts der Turbine 103 des Abgasturboladers 102 angeordnet (hierbei kann ein Teil des Diffusor-Gehäuseabschnitts 110 sogar mit der Turbine 103 überlappen) und empfängt den ersten Abgasstrom 150 unmittelbar aus der Turbine 103 des Abgasturboladers 102. Der Abgasstrom 150 strömt über eine Einström-Öffnung 310 in den Diffusor-Gehäuseabschnitt 110 des Gasaustrittsgehäuses 100 ein. Der Abgasstrom 150 hat hierbei beim Einströmen eine Einströmrichtung 151. In der in Figur 1 gezeigten Ausführungsform behält der Abgasstrom 150 die Einströmrichtung 151 weitestgehend bei, sodass die Strömungsrichtung des Abgasstroms 150 im Diffusor-Gehäuseabschnitt 110 der Einströmrichtung 151 im Wesentlichen entspricht. Geringfügige Richtungsänderungen, insbesondere bereichsweise Richtungsänderungen von Teilen des Abgasstroms 150 innerhalb des Diffusor-Teilgehäuses 110 sind hierbei nicht zu berücksichtigen.

Gemäß der im Zusammenhang mit Figur 1 beschriebenen Ausführungsform weitet sich der Diffusor-Gehäuseabschnitt 110 in Strömungsrichtung auf. Insbesondere kann sich der Diffusor-Gehäuseabschnitt 110 in Strömungsrichtung des ersten Abgasstroms 150 kontinuierlich aufweiten. Ein solcher Diffusor-Gehäuseabschnitt kann als ein axialer Diffusor-Gehäuseabschnitt bzw. ein axialer Diffusor bezeichnet werden. Der axiale Diffusor kann eine im Wesentlichen konische Form oder einen im Wesentlichen konisch geformten Strömungsraum haben. Durch das sich Aufweiten des Diffusor-Gehäuseabschnitts 110 kann sich der dem Abgasstrom 150 zur Verfügung stehende Strömungsquerschnitt erhöhen. Insbesondere kann sich der dem Abgasstrom 150 zur Verfügung stehende Strömungsquerschnitt in Strömungsrichtung des Abgasstroms 150 erhöhen. Unter sich aufweiten kann verstanden werden, dass das Diffusor-Teilgehäuse einen sich in Strömungsrichtung des axial fließenden Abgasstroms erweiternden Querschnitt aufweist. Die Erhöhung des Strömungsquerschnitts in Strömungsrichtung kann zu einer Verzögerung des Abgasstroms 150 führen. Die Erhöhung des Strömungsquerschnitts in Strömungsrichtung kann zu einer Steigerung des Drucks des Abgasstroms 150 führen. Die Verzögerung des Abgasstroms 150 kann im Diffusor-Gehäuseabschnitt 110 des Gasaustrittsgehäuses 100 erfolgen, sodass der Abgasstrom 150 beim Ausströmen aus dem Diffusor-Gehäuseabschnitt 110 verzögert und/oder mit gesteigertem Druck vorliegt. Ein Abgasstrom 150 kann beim Verlassen des Diffusor-Gehäuseabschnitts 110 ein verzögerter Abgasstrom sein.

Gemäß der im Zusammenhang mit Figur 1 beschriebenen Ausführungsform folgt auf den Diffusor-Gehäuseabschnitt 110 in Strömungsrichtung unmittelbar ein Verteiler-Gehäuseabschnitt 120. Der Verteiler-Gehäuseabschnitt 120 empfängt den verzögerten Abgasstrom aus dem Diffusor-Gehäuseabschnitt 110. Im Verteiler-Gehäuseabschnitt 120 kann der verzögerte Abgasstrom aufgeteilt werden.

Gemäß der im Zusammenhang mit Figur 1 beschriebenen Ausführungsform erstreckt sich der Verteiler-Gehäuseabschnitt 120 entlang einer Verteiler-Achse 153. Die Verteiler-Achse 153 kann als eine Gerade verstanden werden, die der Strömungsrichtung von zumindest einem, beispielsweise zwei typischerweise gegenläufig strömenden Abgas-Teilströmen 152 entspricht. Die Ausleite-Richtung eines der gegenläufig strömenden Abgas-Teilströme 152 kann entlang der Verteiler-Achse 153 verlaufen. Die Verteiler-Achse 153 kann richtungslos sein. Die Ausleite-Richtung eines Abgas-Teilstroms 152 kann parallel zur bzw. entlang der Verteiler-Achse 153 verlaufen. Die Ausleite-Richtung eines Abgas-Teilstroms 152 kann eine Strömungsrichtung eines aus dem Verteiler-Gehäuseabschnitts 120 entlang der Verteiler-Achse ausströmenden Abgas-Teilstroms sein. Die Verteiler-Achse 153 kann in den hierin beschriebenen Ausführungsformen in der Regel als eine Gerade beschrieben werden, es kann jedoch in Ausführungsformen vorkommen, dass die Verteiler-Achse sich im Verteiler-Gehäuseabschnitt 120 in Strömungsrichtung eines Abgas-Teilstroms 152 ändert, beispielsweise abknickt, gebogen wird oder dergleichen. Im Zusammenhang mit der vorliegenden Offenbarung ist als "sich erstrecken" zu verstehen, dass der Verteiler-Gehäuseabschnitt 120 eine räumliche Ausdehnung, beispielsweise eine Länge, entlang der Verteiler-Achse 153 hat. Die Länge kann beispielsweise durch die Verbindungslinie der Mittelpunkte der gegenüberliegenden Öffnungen 130, 132 definiert werden. Die Verteiler-Achse 153 verläuft im Wesentlichen quer zur Einströmrichtung 151, also mit einer vorgegebenen Toleranz orthogonal zur Einströmrichtung, beispielsweise mit einer Toleranz von ±30°. Beispielsweise kann die Verteiler-Achse 153 im Verhältnis zur Einströmrichtung 151 einen Winkel von 90° aufweisen, der Winkel kann aber auch in einem Bereich von 80° - 100° liegen, oder in einem Bereich von 70° - 110° oder 60° - 120°. Der Verteiler-Gehäuseabschnitt 120 kann einen Innenraum aufweisen, der sich entlang der Verteiler-Achse ausdehnt oder erstreckt. Der Verteiler-Gehäuseabschnitt 120 kann dazu eingerichtet sein, einen oder mehrere Abgasströme, insbesondere Abgas-Teilströme 152 entlang der Verteiler-Achse 153 aufzuteilen und/oder zu führen.

Gemäß der im Zusammenhang mit Figur 1 beschriebenen Ausführungsform umfasst der Verteiler-Gehäuseabschnitt 120 zwei in der Verteiler-Achse 153 gegenüberliegende Öffnungen 130, 132. Beide Öffnungen 130, 132 sind dazu vorgesehen, die verteilten Abgas-Teilströme 152 anteilig auszuleiten. Gemäß von Ausführungsformen, die mit weiteren hierin beschriebenen Ausführungsformen kombinierbar sind, ist das Gasaustrittsgehäuse überwiegend symmetrisch ausgeführt, beispielsweise spiegelsymmetrisch. Das Gasaustrittsgehäuse kann dazu vorgesehen sein, den Abgasstrom 150 überwiegend symmetrisch zu verteilen, beispielsweise in Form von symmetrisch verteilten Abgas-Teilströmen. Der verteilte Abgasstrom kann mehrere Abgas-Teilströme, beispielsweise zwei Abgas-Teilströme 152 umfassen. Der verteilte Abgasstrom kann anteilig aus beiden Öffnungen 130, 132 ausströmen. Der verteilte Abgasstrom kann in Form von zwei überwiegend gleich stark strömenden Abgas-Teilströmen, also Abgas-Teilströmen mit überwiegend gleichem Massestrom oder Volumenstrom, aus den Öffnungen 130, 132 ausströmen. Ein erster Abgas-Teilstrom kann aus der Öffnung 130 ausströmen und einen Massestrom aufweisen, der dem Massestrom eines zweiten Abgas-Teilstroms entspricht, wobei der zweite Abgas-Teilstrom aus der zweiten Öffnung 132 ausströmen kann. Der Massestrom der Abgas-Teilströme kann überwiegend gleich sein, oder sich geringfügig unterscheiden. Der Massestrom des ersten Abgas-Teilstroms kann ±15 % vom Massestrom des zweiten Abgas-Teilstroms abweichen, beispielsweise ±10 % oder ±5 %.

Gemäß von Ausführungsformen, die mit weiteren hierin beschriebenen Ausführungsformen kombinierbar sind, kann der Innenraum des Verteiler-Gehäuseabschnitts 120 ein zusammenhängender Innenraum sein. Der Innenraum des Verteiler-Gehäuseabschnitts 120 kann auch weitere Vorrichtungen umfassen, beispielsweise Bleche, Spickel, Rohrabschnitte oder dergleichen, wodurch die Strömung des Abgasstroms, insbesondere die Verteilung des Abgasstroms begünstigt werden kann. Die genannten Vorrichtungen können so gestaltet sein, dass der Verteiler-Gehäuseabschnitt zumindest abschnittsweise aufgeteilt wird und der Innenraum des Verteiler-Gehäuseabschnitts zumindest abschnittsweise unterteilt ist. Die vorliegende Erfindung betrifft auch einen solchen zumindest abschnittsweise unterteilten Verteiler-Gehäuseabschnitt.

Gemäß der im Zusammenhang mit Figur 1 beschriebenen Ausführungsform strömt der verzögerte Abgasstrom 150 vorwiegend in einer Strömungsrichtung, die im Wesentlichen der Einströmrichtung 151 entspricht (etwa mit einer Toleranz von ±30°, in Ausführungsformen sogar von ±15°). Die verteilten Abgas-Teilströme 152 strömen in Richtung der Öffnungen 130, 132, also entlang der Verteiler-Achse 153. Gemäß der im Zusammenhang mit Figur 1 beschriebenen Ausführungsform kommt es bei dem Verteilen des verzögerten Abgasstroms 150 in die Abgas-Teilströme 152 zu einer Umlenkung des verzögerten Abgasstroms. Die Umlenkung geschieht hierbei gleichzeitig mit dem Verteilen des verzögerten Abgasstroms 150 ab dem Übergang vom Diffusor-Gehäuseabschnitt 110 zum Verteiler-Gehäuseabschnitt 120. Die verteilten Abgas-Teilströme 152 umfassen zusammen den Volumenstrom des Abgasstroms 150.

Gemäß der im Zusammenhang mit Figur 1 beschriebenen Ausführungsform kann der Diffusor-Gehäuseabschnitt 110 in den Verteiler-Gehäuseabschnitt 120 hineinragen. Als hineinragen ist zu verstehen, dass der Diffusor-Gehäuseabschnitt zumindest teilweise vom Verteiler-Gehäuseabschnitt umschlossen ist. Ein vollständiges Hineinragen ist möglich, sodass sich der Diffusor-Gehäuseabschnitt des Gasaustrittsgehäuses bei außenseitiger Betrachtung des Gasaustrittsgehäuses ausschließlich durch eine Einström-Öffnung erkennbar macht. Das zumindest teilweise Hineinragen des Diffusor-Gehäuseabschnitts in den Vereinigungsgehäuseabschnitt kann eine kompakte Ausführung des Gasaustrittsgehäuses ermöglichen und einen günstigen Einfluss auf die Strömung der einströmenden und/oder ausströmenden Abgasströme haben.

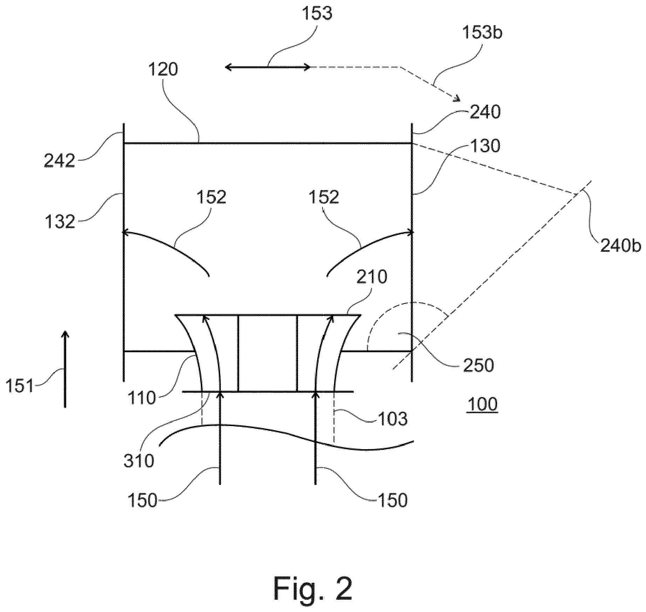

Figur 2 zeigt ein Gasaustrittsgehäuse 100 für einen Abgasturbolader 102 gemäß einer Ausführungsform. Bei dem in Figur 2 gezeigten Gasaustrittsgehäuse kann es sich um ein Gasaustrittsgehäuse 100 gemäß einer in Bezug auf Figur 1 beschriebenen Ausführungsform handeln. Das in Figur 2 beschriebene Gasaustrittsgehäuse zeichnet sich gemäß einem Aspekt durch eine überwiegend rohrartige Gestaltung des Verteiler-Gehäuseabschnitts 120 aus, wobei die Verteiler-Achse 153 der Längsrichtung des überwiegend rohrartigen Verteiler-Gehäuseabschnitts 120 entspricht.

Gemäß der in Zusammenhang mit Figur 2 beschriebenen Ausführungsform, welche mit weiteren hierin beschriebenen Ausführungsformen kombinierbar ist, kann das Gasaustrittsgehäuse einen oder mehrere Flansche 240, 242 umfassen. Die Flansche 240, 242 können an den Öffnungen 130, 132 vorgesehen sein. Ebenso kann ein Flansch an weiteren Öffnungen des Gasaustrittsgehäuses 100 vorgesehen sein, beispielsweise der Einström-Öffnung des Diffusor-Gehäuseabschnitts 110 für den Abgasstrom 150. Die Flansche können zur Verbindung mit bzw. zum Anschluss von weiteren Komponenten eines Abgassystems vorgesehen sein. Die weiteren Komponenten können direkt unter Verwendung des Flansches an das Gasaustrittsgehäuse gekoppelt werden. Die Flansche können für die Verbindung mit weiteren Komponenten, wie z.B. weiteren Flanschen, beispielsweise mit Hilfe von Bolzen, Schellen oder Klemmbändern vorgesehen sein. Beispielsweise können V-Band-Flansche bzw. T-Flansche vorgesehen sein. Der Flansch kann zum Anbringen von zumindest teilweise flexiblen Verbindungsstücken, wie beispielsweise Kompensatoren, vorgesehen sein. Auf günstige Ausführungsformen eines Gasaustrittsgehäuses mit Kompensatoren wird an späterer Stelle genauer eingegangen.

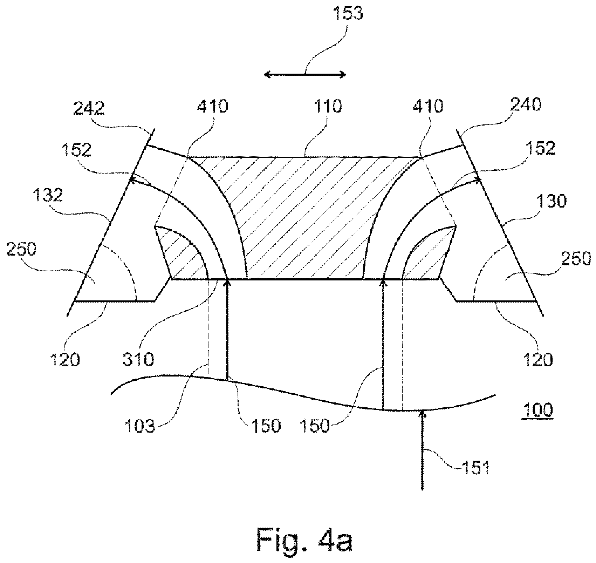

Gemäß von Ausführungsformen, welche mit weiteren hierin beschriebenen Ausführungsformen kombinierbar sind, kann ein erfindungsgemäßes Gasaustrittsgehäuse, beispielsweise das in Zusammenhang mit Figur 2 beschriebene Gasaustrittsgehäuse 100, sowie beispielsweise auch das zu späterer Stelle in Zusammenhang mit Figur 4a beschriebene Gasaustrittsgehäuse 100, einen oder mehrere abgewinkelte Flansche, wie etwa den abgewinkelten Flansch 240b beinhalten. Der Flansch kann eine beispielsweise ringförmige Verbreiterung umfassen. Der Richtung eines Flansches kann in dem hierin beschriebenen Zusammenhang als die Richtung der Flächennormale des Flansches verstanden werden, wobei die Fläche des Flansches als die durch den Flansch definierte Ebene verstanden werden kann (z.B. die durch den Flansch definierte Auflagefläche für einen mit dem Flansch zu verbindenden weiteren Leitungsflansch, beispielsweise die ringförmige Verbreiterung). Ein Flansch kann dann als abgewinkelt verstanden werden, wenn er nicht quer, also nicht in einem Winkel von etwa 90°, zur Einströmrichtung 151 angebracht ist. Der Flansch kann auch dann als abgewinkelt verstanden werden, wenn die Verteiler-Achse 153 sich im Vereinigungsgehäuseabschnitt ändert, sodass die Verteiler-Achse nicht einer Geraden entspricht. Die Änderung der Verteiler-Achse kann, wie in Figur 2 gezeigt, abschnittsweise erfolgen. Die Änderung der Verteiler-Achse kann kontinuierlich erfolgen, beispielsweise wenn der Verteiler-Gehäuseabschnitt bogenartig gestaltet ist. Der abgewinkelte Flansch 240b kann derart ausgeführt sein, dass in einem Teilbereich des Verteiler-Gehäuseabschnitts 120 die Strömungsrichtung eines Abgas-Teilstroms 152 und/oder die Verteiler-Achse 153b beispielsweise durch eine Anpassung der Form des Verteiler-Gehäuseabschnitts 120 geändert bzw. umgelenkt wird. Der abgewinkelte Flansch 240b, welcher typischerweise die Verteiler-Achse 153 im Bereich des Flansches in einer Ebene radial umspannt, kann auf einer von der Einströmrichtung 151 und der Verteiler-Achse 153 gebildeten Ebene in Bezug auf die Einströmrichtung beispielsweise in einem Winkel von 135° abgewinkelt sein, wie es in Figur 2 mit Winkel 250 gezeigt ist. Abgewinkelte Flansche mit einem Winkel 250 können in einem weiten Bereich ausgeführt sein, beispielsweise mit einem Winkel, der in einem Bereich von 40°-140° in Bezug auf die Einströmrichtung 151 liegt, so wie etwa 60°-120° oder 80°-100°. Mit dem abgewinkelten Flansch 240b geht typischerweise auch eine abgewinkelte Öffnung 130 einher.

Durch einen abgewinkelten Flansch kann sich eine vorteilhafte Bauform des Gasaustrittsgehäuses ergeben. Insbesondere kann das Gasaustrittsgehäuse in günstiger Weise mit anderen Komponenten, beispielsweise weiteren Komponenten eines Abgassystems verbunden werden. Durch das Vorhandensein eines abgewinkelten Flanschens kann das Gasaustrittsgehäuse kompakt und platzsparend ausgeführt werden. Durch das Vorhandensein eines abgewinkelten Flansches kann mindestens einer der verteilten Abgas-Teilströme auf günstige Weise geführt werden, sodass unvorteilhafte Strömungen und die damit einhergehenden, höheren Strömungswiderstände, beispielsweise durch Ablösungen oder Wirbel, vermieden werden.

Gemäß der in Zusammenhang mit Figur 2 beschriebenen Ausführungsform des Gasaustrittsgehäuses 100 kann der Diffusor-Gehäuseab schnitt 110 so ausgeführt sein, dass im Bereich des Diffusor-Gehäuseabschnitts 110 die Richtung des Abgasstroms 150 im Wesentlichen beibehalten wird. Die Wirkung des Diffusor-Gehäuseabschnitts 110 als Diffusor beruht darauf, dass sich der Querschnitt des Strömungsraums in Einströmrichtung 151, also in Strömungsrichtung des Abgasstroms 150, in radialer Richtung aufweitet. Insbesondere kann sich der Diffusor-Gehäuseabschnitt 110 in Strömungsrichtung des ersten Abgasstroms 150 kontinuierlich aufweiten. Insbesondere kann der Diffusor-Gehäuseabschnitt 110 als konischer Diffusor ausgeführt sein. Der Diffusor-Gehäuseabschnitt 110 kann einen Bereich umfassen, der nicht vom Abgasstrom 150 durchströmt wird, wie z.B. den im Zentrum des Diffusor-Gehäuseabschnitts 110 liegenden Totraum. Der Totraum kann bei größeren Strömungsquerschnitten nötig sein, um ein verzögerungsfreies Durchströmen des Diffusor-Gehäuseabschnitts 110 von zentral liegenden Teilen des Abgasstroms 150 zu verhindern.

Gemäß der in Zusammenhang mit Figur 2 beschriebenen Ausführungsform kommt es ab dem Übergang vom Diffusor-Gehäuseabschnitt 110 zum Verteiler-Gehäuseabschnitt zu einer Verteilung des Abgasstroms 150 in zwei Abgas-Teilströme 152. Die Abgas-Teilströme 152 strömen jeweils in Ausleite-Richtung entlang der Verteiler-Achse 153.

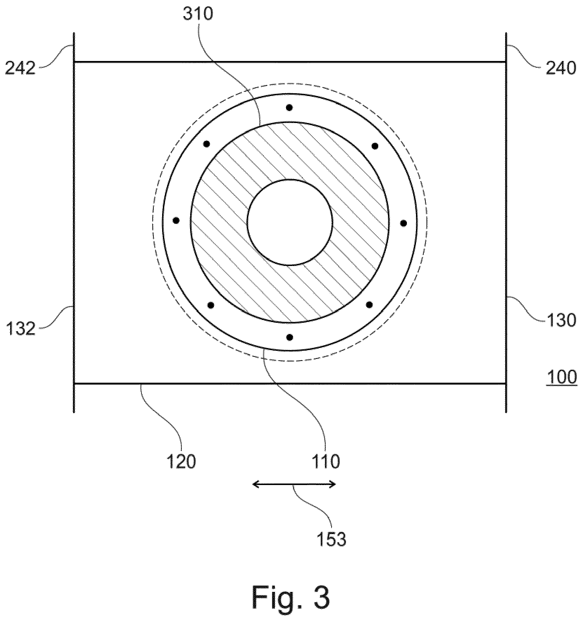

Figur 3 zeigt ein Gasaustrittsgehäuse 100 für einen Abgasturbolader gemäß einer Ausführungsform. Bei dem in Figur 3 gezeigten Gasaustrittsgehäuse kann es sich um ein Gasaustrittsgehäuse 100 gemäß einer der zuvor beschriebenen Ausführungsformen handeln. Insbesondere kann es sich um eine Draufsicht auf eine Einström-Öffnung des Diffusor-Gehäuseabschnitts 110 eines Gasaustrittsgehäuses 100 gemäß des in Zusammenhang mit Figur 2 beschriebenen Gasaustrittsgehäuses 100 handeln.

Gemäß der in Zusammenhang mit Figur 3 beschriebenen Ausführungsform umfasst der Diffusor-Gehäuseabschnitt 110 eine kreisartige Einström-Öffnung 310, die außenseitig von einem Flansch begrenzt ist. In weiteren Ausführungsformen, die mit hierin beschriebenen Ausführungsformen kombinierbar sind, kann die Einströmöffnung 310 weitere Formen umfassen und beispielsweise in Form einer Ellipse, eines Rechtecks oder dergleichen ausgeführt sein. Der Flansch kann dazu dienen, das Gasaustrittsgehäuse 100 mit einem Abgasturbolader fluidisch zu verbinden, sodass ein vom Abgasturbolader stammender Abgasstrom in den Diffusor-Gehäuseabschnitt 110 des Gasaustrittsgehäuses 100 einströmt. Die kreisartige Einström-Öffnung 310 umfasst weiterhin einen inneren, kreisrunden, verschlossenen Bereich. Hierbei kann es sich um eine Grenzfläche, beispielsweise eine Wand, des im Zusammenhang mit Figur 2 beschriebenen Totraums handeln.

Gemäß von Ausführungsformen des Gasaustrittsgehäuses 100 erfolgt die Umlenkung des Abgasstroms 150, der beim Durchströmen des Diffusor-Gehäuseabschnitts 110 die Einströmrichtung 151 im Wesentlichen beibehält, im Vereinigungsgehäuseabschnitt 120. Die Umlenkung erfolgt, typischerweise gleichzeitig mit der Aufteilung des Abgasstroms in die Abgas-Teilströme 152, in Richtung der jeweiligen Ausleite-Richtung entlang der Verteiler-Achse 153. Ein strömungstechnisch vorteilhaftes Umlenken des Abgasstroms 150 kann voraussetzen, dass der Massestrom und/oder Volumenstrom der verteilten Abgas-Teilströme 152 beim Ausströmen aus den beiden Öffnungen 130, 132 in etwa gleich groß ist.

Gemäß von Ausführungsformen des Gasaustrittsgehäuses 100 kann es jedoch auch möglich sein, dass der Volumenstrom der Abgas-Teilströme 152 unterschiedlich groß ist und dennoch eine Umlenkung und/oder Aufteilung des Abgasstroms 150 nach dem Verlassen des Diffusor-Gehäuseabschnitts 110 im Verteiler-Gehäuseabschnitt 120 gemäß einer vorhergesehenen Betriebsart erfolgt. In einem Beispiel kann dies dadurch erreicht werden, dass das Gasaustrittsgehäuse 100 in einem Abgassystem eingebunden ist, in dem das Einströmen des Abgasstroms zu einem Staudruck im Abgassystem führt. Der Staudruck im Abgassystem kann asymmetrisch sein. Das Abgassystem kann so gestaltet sein, dass der Staudruck im Abgassystem dazu führt, dass die verteilten Abgas-Teilströme 152 vorrangig aus einer der Öffnungen 130, 132 entweichen. Das kann beispielsweise dann vorkommen, wenn eine der Öffnungen 130, 132 mit einer Komponente verbunden ist, die ein freies Ausströmen des Abgasstroms aus dieser Öffnung verhindert, beispielsweise einem relativ zum restlichen Abgassystem verengten Rohr, während die zweite der Öffnungen 130, 132 beispielsweise in weiterer Folge in einen Schornstein mündet und so das freie Ausströmen des Abgas-Teilstroms ermöglicht.

Figur 4a zeigt schematisch ein Gasaustrittsgehäuse 100 für einen Abgasturbolader 102 gemäß einer Ausführungsform. Bei dem in Figur 4a gezeigten Gasaustrittsgehäuse kann es sich um ein Gasaustrittsgehäuse 100 gemäß einer der zuvor beschriebenen Ausführungsformen handeln. Zusätzlich zu zuvor beschriebenen Ausführungsformen umfasst das Gasaustrittsgehäuse in Fig. 4a einen Diffusor-Gehäuseabschnitt 110, in dem sich die Strömungsrichtung des Abgasstroms 150 beim Durchströmen des Diffusor-Gehäuseabschnitts ändert und somit der Abgasstrom 150 ebenfalls im Diffusor-Gehäuseabschnitt 110 umgelenkt wird.

Gemäß der in Zusammenhang mit Figur 4a beschriebenen Ausführungsform kann der Abgasstrom 150 in einer Einströmrichtung 151 in den Diffusor-Gehäuseabschnitt 110 einströmen. Während des Durchströmens des Diffusor-Gehäuseabschnitts 110 wird der Abgasstrom 150 in der gezeigten Ausführungsform gleichzeitig verzögert und radial umgelenkt. Der verzögerte Abgasstrom 150 wird über eine ringförmige Einleite-Öffnung 410 in den Vereinigung-Gehäuseabschnitt 120 eingeleitet. Die Strömungsrichtung des verzögerten Abgasstroms 150 kann beim Einleiten über die ringförmige Einleite-Öffnung 410 bereits teilweise der jeweiligen Ausleite-Richtung entlang der Verteiler-Achse 153 entsprechen. Im Verteiler-Gehäuseabschnitt 120 kann eine weitere Umlenkung der Abgas-Teilströme 152 erfolgen. Das Gasaustrittsgehäuse 100 kann mehrere abgewinkelte Flansche 240, 242 umfassen, beispielsweise, wie in Figur 4a gezeigt, zwei Flansche mit einem Winkel 250 von 75°.

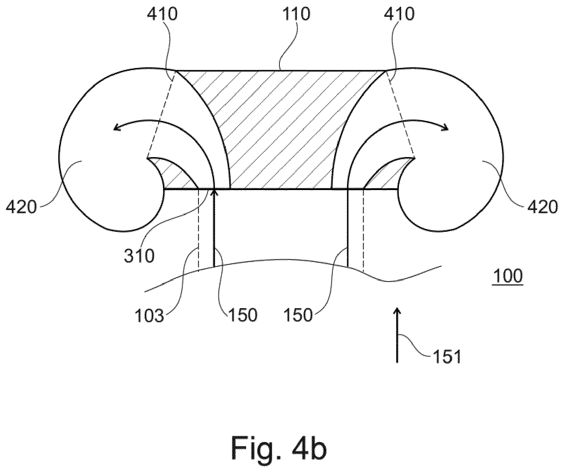

Figur 4b zeigt schematisch ein Gasaustrittsgehäuse 100 für einen Abgasturbolader 102 gemäß einer Ausführungsform. Bei dem in Figur 4b gezeigten Gasaustrittsgehäuse kann es sich um ein Gasaustrittsgehäuse 100 gemäß einer der zuvor beschriebenen Ausführungsformen handeln. Insbesondere kann es sich bei dem in Figur 4b gezeigten Gasaustrittsgehäuse um eine Ansicht des in Figur 4a gezeigten Gasaustrittsgehäuses handeln, wobei die Schnittebene entlang der Einströmrichtung um 90 ° gedreht wurde, sodass die in Figur 4a sichtbaren Öffnungen 130, 132 nun außerhalb der Schnittebene liegen.

Gemäß der in Zusammenhang mit Figur 4b beschriebenen Ausführungsform kann das Gasaustrittsgehäuse 100 einen sich in Umfangsrichtung des Diffusor-Gehäuseabschnitts 110 erstreckenden, zumindest teilweise spiralartigen Sammelabschnitt 420 aufweisen. Die Umfangrichtung kann dabei die Richtung sein, die die Einströmrichtung 151 radial umspannt. Die Umfangrichtung kann die Richtung sein, die normal zur Einströmrichtung 151 liegt. Der Sammelabschnitt 420 kann eine im Wesentlichen zumindest Abschnittsweise ringartige Struktur sein, die zumindest teilweise einen spiralartigen Bereich aufweist. Der spiralartige Bereich kann sich radial zur Einströmrichtung spiralartig aufweiten. Der spiralartige Bereich kann im axialen Schnitt, beispielsweise der Einströmrichtung 151, spiralartig sein. Der Sammelabschnitt 420 kann zumindest abschnittsweise die Funktion eines Diffusors erfüllen. Der Sammelabschnitt 420 kann zumindest abschnittsweise die Verteilung des Abgasstroms bewirken. Der Sammelabschnitt 420 kann zumindest abschnittsweise die Umlenkung des Abgasstroms oder eines Abgas-Teilstroms 152 hin zu einer Öffnung 130, 132 bewirken. Der Diffusor-Gehäuseabschnitt 110 kann eine ringförmige Einleite-Öffnung 410 umfassen. Die ringförmige Einleite-Öffnung 410 kann entweder in den spiralartigen Sammelabschnitt 420 oder den Verteiler-Gehäuseabschnitt übergehen. Der Bereich des Gasaustrittsgehäuses 100, der nicht zum spiralartigen Sammelabschnitt 420 zählt, kann sich durch das Vorhandensein einer Öffnung 130, 132 in einer radial zur Einströmrichtung 151 liegenden Richtung vom spiralartigen Sammelabschnitt 420 unterscheiden. Wie in Figur 4a und 4b gezeigt kann das Gasaustrittsgehäuse so ausgeführt sein, dass sich, wenn sich radial zur Einleite-Öffnung 410 eine Öffnung 130, 132 befindet, der jeweilige Abschnitt keine Spiralform aufweist und somit kein spiralartiger Sammelabschnitt, sondern ein Verteiler-Gehäuseabschnitt ist. Die Spiralform des spiralartigen Sammelabschnitts 420 wird in dem in Fig. 4b gezeigten Schnitt deutlich.

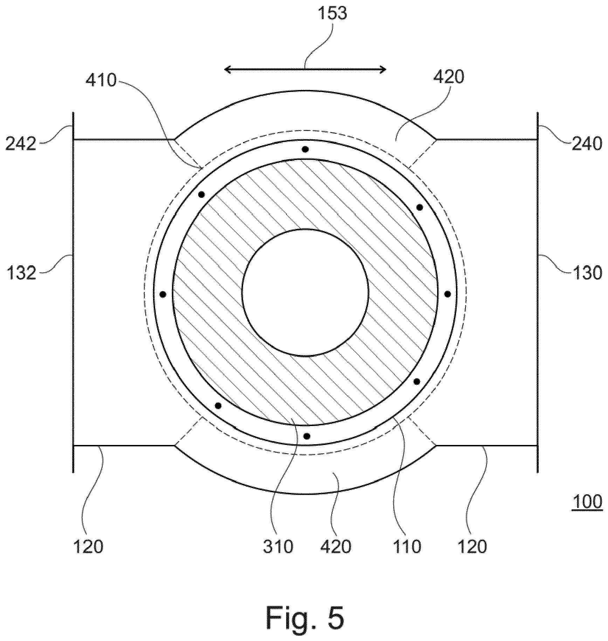

Figur 5 zeigt ein Gasaustrittsgehäuse 100 für einen Abgasturbolader gemäß einer Ausführungsform. Bei dem in Figur 5 gezeigten Gasaustrittsgehäuse kann es sich um ein Gasaustrittsgehäuse 100 gemäß einer der zuvor beschriebenen Ausführungsformen handeln. Insbesondere kann es sich um eine Draufsicht auf eine Einström-Öffnung des Diffusor-Gehäuseabschnitts 110 eines Gasaustrittsgehäuses 100 gemäß des in Zusammenhang mit Figur 4a und 4b beschriebenen Gasaustrittsgehäuses 100 handeln. Zum besseren Verständnis wurden auch im Inneren des Gasaustrittsgehäuses 100 liegende Merkmale gezeichnet, insbesondere Merkmale des Diffusor-Gehäuseabschnitts 110 und des spiralartigen Sammelabschnitts 420.

In der in Figur 5 gezeigten Ausführungsform wird deutlich, dass die Verzögerung des Abgasstroms 150 gleichzeitig mit einer Umleitung des Abgasstroms in eine radiale Richtung geschieht. Die Umleitung in eine radiale Richtung hat zur Folge, dass der dem Abgasstrom 150 zur Verfügung stehende Querschnitt entlang der Strömungsrichtung mit zunehmendem Radius steigt. Durch die Umleitung in radiale Richtung strömt der verzögerte Abgasstrom nur teilweise in die gewünschte Ausleite-Richtung. Um die gewünschte Verteilung des Abgasstroms 150 in die Abgas-Teilströme 152 zu erreichen, umfasst das Gasaustrittsgehäuse 100 in der in Figur 5 gezeigten Ausführungsform einen spiralartigen Sammelabschnitt 420. Im spiralartigen Sammelabschnitt 420 wird der dort einströmende Abgasstrom 150 weiter verzögert und zusätzlich zur radialen Richtung entlang der Umfangrichtung des Diffusor-Gehäuseabschnitts 110 umgelenkt. Trotz der möglichen Verzögerung kann der spiralartige Sammelabschnitt als eine Komponente des Verteiler-Gehäuseabschnitts 120 betrachtet werden.

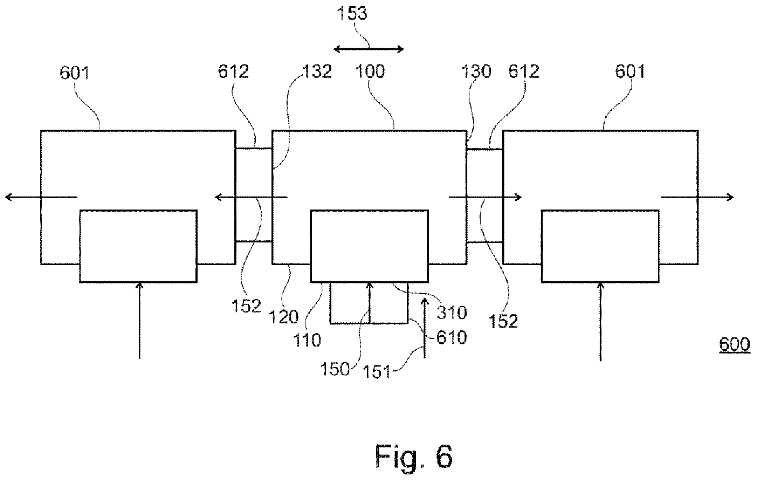

Figur 6 zeigt eine Anordnung 600 von drei Gasaustrittsgehäusen, wobei es sich bei dem innenliegenden Gasaustrittsgehäuse um ein Gasaustrittsgehäuse 100 gemäß hierin beschriebener Ausführungsformen handelt. Der Abgasturbolader 102 und die Turbine 103 sind der Übersichtlichkeit halber nicht eingezeichnet. Die außenliegenden Gasaustrittsgehäuse sollen als zweites Gasaustrittsgehäuse 601 bezeichnet werden. Das zweite Gasaustrittsgehäuse 601 ist ein Gasaustrittsgehäuse gemäß einer hierin nicht beanspruchten Ausführungsform. Eine Anordnung 600 gemäß Figur 6 kann dazu vorgesehen sein, mehrere parallele Abgasströme, wie sie beispielsweise aus mehreren nebeneinander angeordneten, beispielsweise entlang einer Gerade aufgereihten Turboladern entstammen, einem Abgassystem mit zwei Ableitungen zuzuführen, oder für zwei getrennte Abgassysteme aufzuteilen. Die Verbindung der jeweiligen Gasaustrittsgehäuse untereinander, beispielsweise zwischen einem ersten Gasaustrittsgehäuse 100 und einem zweiten Gasaustrittsgehäuse 601, kann in einer Ausführungsform durch das direkte Verbinden der Flansche 240, 242 erfolgen. Die Verbindung kann jedoch auch indirekt, beispielsweise über weitere Vorrichtungen, erfolgen.

Wie in Figur 6 gezeigt kann ein erstes Gasaustrittsgehäuse 100, bei dem es sich um ein Gasaustrittsgehäuse gemäß einer hierin beschriebenen Ausführungsform handeln kann, einen oder mehrere Kompensatoren 610, 612 umfassen. Der eingangsseitige Kompensator 610 befindet sich hierbei zwischen einer Turbine des Abgasturboladers und dem Diffusor-Gehäuseab schnitt 110 des zweiten Gasaustrittsgehäuses und verbindet den aus der Turbine des Abgasturboladers austretenden Gasstrom fluidisch mit dem Diffusor-Gehäuseabschnitt 110. Der eingangsseitige Kompensator 610 kann einen aus der Turbine des Abgasturboladers stammenden Abgasstrom 150 in das erste Gasaustrittsgehäuse einleiten. Der ausgangsseitige Kompensator 612 befindet sich zwischen einer Öffnung 130, 132 des ersten Gasaustrittsgehäuses und einer Einleite-Öffnung eines zweiten Gasaustrittsgehäuses. Der ausgangsseitige Kompensator 612 kann einen aus dem ersten Gasaustrittsgehäuse stammenden Abgas-Teilstrom 152 in eine Öffnung eines zweiten Gasaustrittsgehäuses einleiten. Der Kompensator 610, 612 kann mit dem Gasaustrittsgehäuse an einem dafür vorgesehenen Flansch verbunden sein, wobei es sich bei dem Flansch um einen Flansch 240, 242 gemäß einer im Zusammenhang mit Figur 2, 3, 4a oder 5 beschriebenen Ausführungsform des Gasaustrittsgehäuses 100 handeln kann.

Bei den Kompensatoren 610, 612 kann es sich um teilflexible Bauteile handeln, die dazu geeignet sind, heiße Abgase zu führen. Die Kompensatoren können dazu eingerichtet sein, Abgase mit einem Überdruck gegenüber der Außenseite von bis zu 5 bar zu führen. Der Kompensator kann jeweils in Form eines Balges ausgeführt sein, der zwischen zwei Flanschen angebracht ist. Der Balg kann aus gefalztem Edelstahlblech gefertigt sein. Die Flansche des Kompensators können dazu eingerichtet sein, mit an den Gasaustrittsgehäusen vorgesehenen Flanschen verbunden werden. Der Kompensator kann ein Axialkompensator sein. Der Kompensator kann dazu eingerichtet sein, axiale und laterale bzw. radiale Bewegungen auszugleichen. Der Kompensator kann dazu eingerichtet sein, aufgrund von thermischer Expansion auftretende Spannungen zwischen den jeweiligen Bauteilen, beispielsweise zwischen einem Abgasturbolader und einem Gasaustrittsgehäuse, zu vermeiden. Der Kompensator kann dazu eingerichtet sein, eine Übertragung von Vibrationen zwischen den jeweiligen Bauteilen zu vermeiden. Der Kompensator kann teilweise in das Gasaustrittsgehäuse hineinragen.

Gemäß der in Figur 6 gezeigten Ausführungsform ist es für das erste Gasaustrittsgehäuse 100 vorgesehen, mit einem zweiten Gasaustrittsgehäuse 601 fluidisch verbunden zu werden. Aus dem ersten Gasaustrittsgehäuse entstammt an jeder Seite ein Abgas-Teilstrom 152. Der Abgas-Teilstrom 152 wird in eine Öffnung des zweiten Gasaustrittsgehäuses eingeleitet und kann dort weitergeführt und beispielsweise mit einem weiteren Abgasstrom vereinigt werden. Es kann jedoch auch vorgesehen sein, dass das Gasaustrittsgehäuse 100 nur an einer Seite mit einem weiteren Gasaustrittsgehäuse 601 verbunden ist, und dass einer der Abgas-Teilströme 152 direkt in eine weitere Komponente eines Abgassystems eingeleitet wird.

In der in Figur 6 gezeigten Ausführungsform ist eine beispielhafte Anordnung aus einem zentralen ersten Gasaustrittsgehäuse 100 und zwei peripher dazu angeordneten zweiten Gasaustrittsgehäusen 601 gezeigt.

Gemäß einer Ausführungsform, können die in Figur 6 gezeigten Gasaustrittsgehäuse 100, 601 jeweils einen Abgasturbolader 102 umfassen. Der Abgasturbolader 102 kann fluidisch mit dem jeweiligen Gasaustrittsgehäuse verbunden sein. Das Gasaustrittsgehäuse 100 kann Teil des Abgasturboladers 102 sein, sodass der Abgasturbolader 102 das Gasaustrittsgehäuse 100 umfasst. Der Abgasstrom 150 kann ein aus der Turbine, insbesondere der abgasseitigen Turbine des Abgasturboladers 102 stammende Abgasstrom sein. Der Abgasturbolader kann ein Axial-Abgasturbolader sein.

Gemäß einem Aspekt umfasst die vorliegende Erfindung die Verwendung eines Gasaustrittsgehäuses 100 nach einer hierin beschriebenen Ausführungsform in einem Abgassystem eines oder mehrerer Verbrennungsmotoren mit Abgasturboladern. Der Abgasstrom 150 ist typischerweise ein aus einer Turbine eines Abgasturboladers 102 stammende Abgasstrom.

Die Verwendung umfasst das Einleiten des Abgasstroms 150 in einer Einströmrichtung 151 in den Diffusor-Gehäuseabschnitt 110 des Gasaustrittsgehäuses 100. Der Diffusor-Gehäuseabschnitt 110 kann ein Diffusor-Gehäuseabschnitt gemäß einer der hierin beschriebenen Ausführungsformen sein. Insbesondere kann der Diffusor-Gehäuseabschnitt ein axialer Diffusor sein. Insbesondere kann das Gasaustrittsgehäuse 100 einen sich in Umfangrichtung des Diffusor-Gehäuseabschnitts erstreckenden, zumindest teilweise spiralartigen Sammelabschnitt 420 aufweisen. Im Diffusor-Gehäuseabschnitt 110 wird der Abgasstrom 150 entlang der Strömungsrichtung 151 des Abgasstroms verzögert. Die Verwendung kann vorsehen, dass der Diffusor-Gehäuseabschnitt 110 den Abgasstrom 150 zusätzlich zumindest teilweise umlenkt oder umleitet, beispielsweise in Richtung der jeweiligen Ausleite-Richtung entlang der Verteiler-Achse 153.

Die Verwendung umfasst weiterhin das Einleiten des durch den Diffusor-Gehäuseabschnitt verzögerten Abgasstroms 150 in den Verteiler-Gehäuseabschnitt 120. Dazu kann der verzögerte Abgasstrom über eine Einleite-Öffnung 210 in den Verteiler-Gehäuseabschnitt 120 eingeleitet werden. Der Verteiler-Gehäuseabschnitt 120 folgt unmittelbar auf den Diffusor-Gehäuseabschnitt 110. Insbesondere kann der Verteiler-Gehäuseabschnitt 120 ohne ein sich nicht erweiterndes Zwischenstück auf den Diffusor-Gehäuseabschnitt 110 folgen, und/oder der Diffusor-Gehäuseabschnitt 110 kann in den Verteiler-Gehäuseabschnitt 120 hineinragen. Dabei kann der Diffusor-Gehäuseabschnitt 110 optional über einen Kompensator an den Verteiler-Gehäuseabschnitt 120 gekoppelt sein. Durch das Einleiten des verzögerten Abgasstroms 150 in den Verteiler-Gehäuseabschnitt wird der verzögerte Abgasstrom 150 in zwei Abgas-Teilströme 152 aufgeteilt.

Die Aufteilung führt typischerweise dazu, dass der jeweilige verzögerte Abgasstrom 150 in eine Ausleite-Richtung entlang der Verteiler-Achse 153 umgelenkt wird, sodass in weiterer Folge die Abgas-Teilströme 152 entlang der Verteiler-Achse 153 strömen. Die Verwendung kann das Ausleiten der Abgas-Teilströme 152 aus dem Gasaustrittsgehäuse umfassen. Die Abgas-Teilströme 152 können über jeweils eine der Öffnungen 130, 132 ausgeleitet werden, beispielsweise in ein auf das Gasaustrittsgehäuse 100 folgendes Abgassystem.

Im Folgenden werden weitere allgemeine Aspekte der Erfindung beschrieben:

Gemäß einem Aspekt betrifft die Erfindung ein Gasaustrittsgehäuse (100) nach einer hierin beschriebenen Ausführungsform, wobei zwischen den Mittelpunkten der gegenüberliegenden Öffnungen (130, 132) des Verteiler-Gehäuseabschnitts (120) eine Gerade liegt, und wobei die Gerade im Wesentlichen quer zur Einströmrichtung (151) verläuft.

Gemäß einem Aspekt betrifft die Erfindung ein Gasaustrittsgehäuse (100) nach einer hierin beschriebenen Ausführungsform, wobei das Gasaustrittsgehäuse (100) dazu eingerichtet ist, den einströmenden Abgasstrom (150) symmetrisch in zwei gleich große verteilte Abgas-Teilströme (152) zu teilen.

Die hierin beschriebenen Ausführungsformen erlauben die Bereitstellung vorteilhafter Abgassysteme für Verbrennungsmotoren mit Turboladern. Insbesondere können derartige Abgassysteme platzsparend umgesetzt werden und im Vergleich zu konventionellen Abgassystemen einen geringeren Strömungswiderstand und damit eine hohe Effizienz aufweisen. Ein Abgassystem mit Gasaustrittsgehäusen gemäß einer hierin beschriebenen Ausführungsform kann mit wenigen Bauteilen realisiert werden, sodass sich hieraus ein Vorteil durch geringere Material-, Bau- und Wartungskosten ergeben kann.

### Bezugszeichenliste:

- 100: Gasaustrittsgehäuse
- 102: Abgasturbolader
- 103: Turbine
- 110: Diffusor-Gehäuseabschnitt
- 120: Verteiler-Gehäuseabschnitt
- 130: Öffnung
- 132: Öffnung
- 150: Einströmender Abgasstrom
- 151: Einströmrichtung
- 152: Abgas-Teilströme
- 153: Verteiler-Achse
- 153b: Abgewinkelte Verteiler-Achse

- 210: Einleite-Öffnung des Diffusor-Gehäuseabschnitts
- 240: Flansch
- 240b: Abgewinkelter Flansch
- 242: Flansch
- 250: Winkel

- 310: Einström-Öffnung des Diffusor-Gehäuseab schnitts

- 410: Ringförmige Einleite-Öffnung
- 420: Spiralartiger Sammelabschnitt

- 600: Anordnung von Gasaustrittsgehäusen
- 601: Zweites Gasaustrittsgehäuse
- 610: Eingangsseitiger Kompensator
- 612: Ausgangsseitiger Kompensator

## Patentansprüche

1. Gasaustrittsgehäuse (100) für einen Abgasturbolader (102), das Gasaustrittsgehäuse (100) umfassend:
einen Diffusor-Gehäuseabschnitt (110) zur Anordnung unmittelbar stromabwärts einer Turbine (103) des Abgasturboladers (102) zur Verzögerung eines aus der Turbine (103) des Abgasturboladers (102) in einer Einströmrichtung (151) unmittelbar in den Diffusor-Gehäuseabschnitt einströmenden Abgasstroms (150), wobei der Diffusor-Gehäuseabschnitt (110) sich in Strömungsrichtung aufweitet, und wobei
der Diffusor-Gehäuseabschnitt (110) zumindest teilweise in den Vereinigungs-Gehäuseabschnitt (120) hineinragt; und
einen stromabwärts unmittelbar auf den Diffusor-Gehäuseabschnitt (110) folgenden Verteiler-Gehäuseabschnitt (120) zum Empfangen des verzögerten Abgasstroms (150) aus dem Diffusor-Gehäuseabschnitt (110), wobei
der Verteiler-Gehäuseabschnitt (120) sich in einer im Wesentlichen quer zur Einströmrichtung (151) verlaufenden Verteiler-Achse (153) erstreckt und zwei entlang der Verteiler-Achse (153) gegenüberliegende Öffnungen (130, 132) für den Abgasstrom umfasst.

2. Das Gasaustrittsgehäuse (100) nach Anspruch 1, wobei die Strömungsrichtung des Abgasstroms (150) von der Einströmrichtung (151) hin zu einer entlang der Verteiler-Achse (153) verlaufenden Ausleite-Richtung im Diffusor-Gehäuseabschnitt (110) und/oder im Verteiler-Gehäuseabschnitt (120) umgelenkt wird.

3. Das Gasaustrittsgehäuse (100) nach einem der Ansprüche 1 oder 2, wobei der Diffusor-Gehäuseabschnitt (110) sich in Strömungsrichtung des ersten Abgasstroms (150) kontinuierlich aufweitet.

4. Das Gasaustrittsgehäuse (100) nach einem der vorhergehenden Ansprüche, wobei zumindest eine der Öffnungen (130, 132) des Verteiler-Gehäuseabschnitts (120) einen Flansch (240, 242) beinhaltet.

5. Das Gasaustrittsgehäuse (100) nach dem vorhergehenden Anspruch, wobei der Flansch (240, 242) abgewinkelt ist, sodass die Flächennormale des zumindest einen Flansches (240, 242) in Bezug auf die Einströmrichtung in einem nicht-rechtwinkligen Winkel (250) abgewinkelt ist.

6. Das Gasaustrittsgehäuse (100) nach einem der vorhergehenden Ansprüche, wobei das Gasaustrittsgehäuse (100) dazu geeignet ist, über zumindest eine der Öffnungen (130, 132) mit zumindest einer weiteren Öffnung eines weiteren Gasaustrittsgehäuses verbunden zu werden.

7. Das Gasaustrittsgehäuse (100) nach einem der vorhergehenden Ansprüche, wobei die Summe der Querschnittsflächen der Öffnungen (130, 132) die Querschnittsfläche der Einleite-Öffnung (210, 410) des Diffusor-Gehäuseabschnitts (110) am Übergang zwischen dem Diffusor-Gehäuseabschnitt (110) und dem Verteiler-Gehäuseabschnitt (120) gleicht oder übersteigt.

8. Das Gasaustrittsgehäuse (100) nach einem der vorhergehenden Ansprüche, wobei
das Gasaustrittsgehäuse (100) einen eingangsseitigen Kompensator (610) zum fluidischen Verbinden des Abgasturboladers (102) mit dem Gasaustrittsgehäuse umfasst, und/oder wobei
das Gasaustrittsgehäuse (100) zumindest einen ausgangsseitigen Kompensator (612) zum fluidischen Verbinden einer der Öffnungen (130, 132) mit einer Öffnung eines weiteren Gasaustrittsgehäuses (601) umfasst.

9. Das Gasaustrittsgehäuse (100) nach einem der vorhergehenden Ansprüche, wobei das Gasaustrittsgehäuse (100) einen sich in Umfangsrichtung des Diffusor-Gehäuseabschnitts (110) erstreckenden, zumindest teilweise spiralartigen Sammelabschnitt (420) aufweist.

10. Das Gasaustrittsgehäuse (100) nach einem der vorhergehenden Ansprüche, wobei der Diffusor-Gehäuseabschnitt (110) am Übergang zum Verteiler-Gehäuseabschnitt (120) eine ringförmige Einleite-Öffnung (210, 410) zum Einleiten des verzögerten Abgasstroms (150) in den Verteiler-Gehäuseabschnitt (120) umfasst.

11. Ein erstes Gasaustrittsgehäuse (100) und ein zweites Gasaustrittsgehäuse, wobei
das erste Gasaustrittsgehäuse ein Gasaustrittsgehäuse (100) nach einem der vorhergehenden Ansprüche ist, und wobei
das erste Gasaustrittsgehäuse (100) dazu eingerichtet ist, den verzögerten Abgasstrom in einer entlang der Verteiler-Achse (153) verlaufenden Ausleite-Richtung aus den Öffnungen (130, 132) auszuleiten, und wobei
zumindest eine der Öffnungen (130, 132) des ersten Gasaustrittsgehäuses fluidisch mit einer Öffnung des zweiten Gasaustrittsgehäuses zum Aufnehmen des verzögerten Abgasstroms verbunden ist, sodass der zumindest eine aus dem ersten Gasaustrittsgehäuse ausgeleitete Abgasstrom in das zweite Gasaustrittsgehäuse (601) eingeleitet wird.

12. Abgasturbolader (102) für einen Verbrennungsmotor, der Abgasturbolader (102) umfassend ein Gasaustrittsgehäuse (100) gemäß eines der Ansprüche 1 bis 10, wobei
der Abgasturbolader mit dem Gasaustrittsgehäuse (100) zum Einleiten des Abgasstroms (150) in den Diffusor-Gehäuseabschnitt (110) des Gasaustrittsgehäuses (100) fluidisch verbunden ist, und wobei
der Abgasstrom (150) ein aus der Turbine (103) des Abgasturboladers (102) stammender Abgasstrom ist.

13. Der Abgasturbolader (102) nach dem vorhergehenden Anspruch, wobei das Gasaustrittsgehäuse (100) dazu eingerichtet ist, über zumindest eine der Öffnungen (130, 132) mit zumindest einer weiteren Öffnung eines weiteren Gasaustrittsgehäuses fluidisch verbunden zu werden.

14. Das Gasaustrittsgehäuse (100) oder der Abgasturbolader (102) nach einem der vorhergehenden Ansprüche, wobei der Abgasturbolader (102) ein Axial-Abgasturbolader ist.

15. Verwendung eines Gasaustrittsgehäuses gemäß eines der Ansprüche 1 bis 13 in einem Abgassystem eines oder mehrerer Verbrennungsmotoren mit Abgasturboladern (102), die Verwendung umfassend:
- Einleiten eines aus der Turbine (103) des Abgasturboladers (102) austretenden Abgasstroms (150) in einer Einströmrichtung (151) in den Diffusor-Gehäuseabschnitt (110) des Gasaustrittsgehäuses (100), wobei der Diffusor-Gehäuseabschnitt (110) des Gasaustrittsgehäuses (100) den Abgasstrom (150) entlang der Strömungsrichtung verzögert,
- Einleiten des durch den Diffusor-Gehäuseabschnitt (110) verzögerten Abgasstroms (150) in den Verteiler-Gehäuseabschnitt (120) des Gasaustrittsgehäuses (100), wobei der Verteiler-Gehäuseabschnitt (120) und/oder der Diffusor-Gehäuseabschnitt (110) des Gasaustrittsgehäuses (100) den Abgasstrom (150) hin zu einer entlang der Verteiler-Achse (153) verlaufenden Ausleite-Richtung umlenkt, und wobei der Verteiler-Gehäuseabschnitt (120) unmittelbar auf den Diffusor-Gehäuseabschnitt (110) folgt.
